# EUROPEAN PATENT SPECIFICATION

(11) **EP 2 120 077 B1**
(45) Date of publication and mention of the grant of the patent: **28.09.2016**
(21) Application number: 09006587.1
(22) Date of filing: 15.05.2009
(51) Int. Cl.: G02B 6/44

(54) **Optical fibre telecommunication cable**
Lichtwellenleiter-Telekommunikationskabel
Câble de télécommunications à fibre optique

(30) Priority: 16.05.2008 FR 0802656
(43) Date of publication of application: 18.11.2009
(73) Proprietor: Draka Comteq B.V., 1083 HJ Amsterdam (NL)
(72) Inventor: Tatat, Olivier, 62231 Sangatte (FR)
(74) Representative: Algemeen Octrooi- en Merkenbureau B.V.

(56) References cited:
- EP-A- 1 052 533
- FR-A- 2 901 890
- US-A- 4 401 361
- US-A- 4 420 220
- US-B1- 7 272 282

## Description

The present invention relates to a telecommunication cable with optical fibres grouped so as to form a plurality of micromodule brought together in a cable. It extends moreover to the method for extracting the fibres from such a cable.

Optical fibre cables comprising several micromodules of optical fibres, each micromodule of optical fibres being wrapped in a retaining enclosure enclosing several fibres are known, in particular, from the documents FR-A-2 665 266 and FR-A-2 706 218 .

A telecommunication cable with micromodules comprises a plurality of optical fibres grouped in micromodules in a cavity constituting the core of the cable is known per se. This central cavity is surrounded by a jacket. A micromodule can contain approximately 2 to 24 fibres, wrapped together in a thin, flexible retaining enclosure. The retaining enclosures of the micromodules and the jackets of the optical fibres can be coloured in order to facilitate identification of the fibres in the cable, for example during a connection operation.

With the development of optical fibre telecommunication systems all the way to the subscriber, known under the English acronym FTTH for "Fiber To The Home" or FTTC for "Fiber To The Curb", production of high-capacity cables containing a large number of optical fibres grouped together in micromodules is sought. Such cables must allow individual access to each micromodule for distribution into a given building or to a given floor. To this end, operators carry out a dropping operation on the telecommunication cable; an opening is made in the cable and one or more micromodules are withdrawn in order to supply a signal to a given optical system.

WO-A-01/98810 describes an optical cable with continuous accessibility, particularly suitable for subscriber local loops and for inside cabling. This cable comprises a protective jacket surrounding a preferably oval cavity receiving micromodules of optical fibres. The cable described in this document can accommodate approximately 12 to 96 optical fibres. The fibres are arranged in the cable so as to occupy the major part of the cavity along the major axis but to leave significant clearance in the minor axis of the cavity. This clearance allows variations in the overlength of the fibres in the cable. The jacket comprises reinforcing elements positioned on either side of the cavity along the major axis. The cable is wound onto a cable drum or bent during installation in a conduit along the major axis, thus taking advantage of the significant clearance in the minor axis. The optical fibres therefore have a certain degree of freedom within the cavity of the cable, allowing stresses to be eliminated during extension of the jacket under a certain tension or under the effect of thermal expansion or contraction. The jacket comprises markings - coloured threads, fracture initiators or regions of lower thickness - for indicating the regions where windows could be cut through for dropping operations. A first access window can thus be opened in order to cut a given micromodule and a second access window is opened in order to extract the selected micromodule for the dropping.

US-A-7 272 282 describes a flat cable comprising optical fibres arranged freely in tubular compartments arranged in a ribbon-like array in the cable. The extraction of fibres from the cable is carried out by opening one or more compartments.

EP-A-0 569 679 describes a flat optical cable having optical fibres arranged freely in tubular metal compartments. This document does not describe the manner in which the fibres are extracted during a dropping operation. Access to the fibres is however difficult due to the metal walls of the compartments.

When the cables of the abovementioned documents are arranged vertically, the micromodules can sag in the cable. The fibres are then subjected to strains which can lead to mechanical strains at the dropping points and increases in attenuation in the fibres.

US-A-4 420 220 discloses arrangements of optical cables. In particular, this document relates to a optical cable comprising a elongated extruded body which includes bores with optical fibres housed loosely in said bore. Also, there is no mention of a optical cable comprising an enclosure containing a plurality of optical fibers, and said envelope being coupled to the jacket of the cable.

US-A-4 401 361 also discloses arrangements of optical cables comprising at least one optical fiber bundle and at least one separated and elongated reinforcing element. It is further disclosed that the optical fiber bundle is surrounded by a jacket. These arrangements do not contain micromodules encompassing an enclosure containing a plurality of optical fibers, with the enclosure being coupled to the jacket.

EP-A-1 052 533 discloses a method for accessing a fiber from a bundle of fibers disposed in a sheat. It does not disclose how to access a fiber from a bundle of fibers disposed in an enclosure which is disposed in a micromodule of a flat optical cable.

A need therefore exists for a cable with micromodules of optical fibres which allows vertical installation without the micromodules sagging in the cable and which, in spite of everything, allows easy dropping of the fibres of the cable.

The invention thus proposes a flat optical fibre telecommunication cable comprising:
- a plurality of micromodules arranged in parallel and in a plane, each micromodule comprising an enclosure enclosing a plurality of optical fibres and a greasy component applied between the fibres,
- a jacket extruded in over said plurality of micromodules, so that the enclosure of said micromodules are coupled to the jacket of the cable.

According to the embodiments, the cable according to the invention can comprise one or more of the following characteristics:
- reinforcing elements arranged in the jacket on both outermost sides of the plurality of micromodules;
- the material of the jacket is chosen from halogen-free flame-retardant (HFFR) materials or polyvinyl chloride (PVC);
- the greasy component applied between the optical fibres is chosen from synthetic or mineral oil-based filling gels.

The invention also proposes a method for dropping optical fibres from a cable according to the invention, comprising steps consisting of:
- making a first opening in the jacket of the cable and the enclosure of at least one micromodule and cutting the fibres of the at least one micromodule, and
- making a second opening in the jacket of the cable, tearing the enclosure of the micromodule and pulling out said cut fibres.

The dropping method according to the invention can be used in a building with a first opening made at a first floor and a second opening made at the floor below. The first opening can serve as a second opening for extraction of cut fibres at the floor above. The dropping method according to the invention can be used for a cable installed substantially vertically.

Other characteristics and advantages of the invention will become apparent on reading the description which follows from embodiments of the invention, given by way of example and with reference to the attached figures which show;
- Figure 1, a cable according to an embodiment of the invention with a portion of jacket pulled away for the purposes of illustration;
- Figure 2, an embodiment of the extraction method according to the invention.

The invention proposes a flat optical fibre telecommunication cable which comprises a plurality of micromodules. By flat cable is meant a cable in which the micromodules of fibres are arranged side by side in a sheet as described in the document US-A-7 272 282 for example. Flat cables are to be seen in contrast to cylindrical cables in which the micromodules of fibres are arranged in a central core, as described in the document WO-A-01/98810. This arrangement in a sheet facilitates access to each micromodule.

Moreover, the use of a cable with micromodules is more flexible than the use of fibres arranged freely in tubes as in the document US-A-7 272 282. In fact, the fibres can be subjected to stresses at the point where they are dropped from such tubes. Moreover, the opening of micromodules is easier because it can be carried out by hand instead of using a cutting tool which is necessary for opening the tubes.

Each micromodule of the cable according to the invention comprises a plurality of optical fibres and a greasy component applied between the fibres. A flexible and fine retaining enclosure encloses the fibres and the greasy component. The greasy component applied between the fibres inside a given micromodule facilitates the extraction of the fibres from the micromodule as will be explained below.

The jacket of the cable according to the invention is extruded over the micromodules; the cable jacket thus rests on the enclosure of each micromodule. Each micromodule is therefore longitudinally coupled to the jacket without the jacket placing excessive stresses on the micromodules and therefore the fibres. As a result the micromodules cannot slide in the cable when the latter is positioned vertically.

The invention thus proposes directly extracting the optical fibres from the cable rather than extracting a whole micromodule as in the prior art. A first opening is made in the jacket of the cable and the enclosure of at least one micromodule and the fibres which it contains are cut. A second opening is made in the jacket of the cable, the enclosure of the micromodule is opened and all the cut fibres are pulled out. The greasy component arranged in the micromodules between the fibres allows such a direct extraction of one or more fibres.

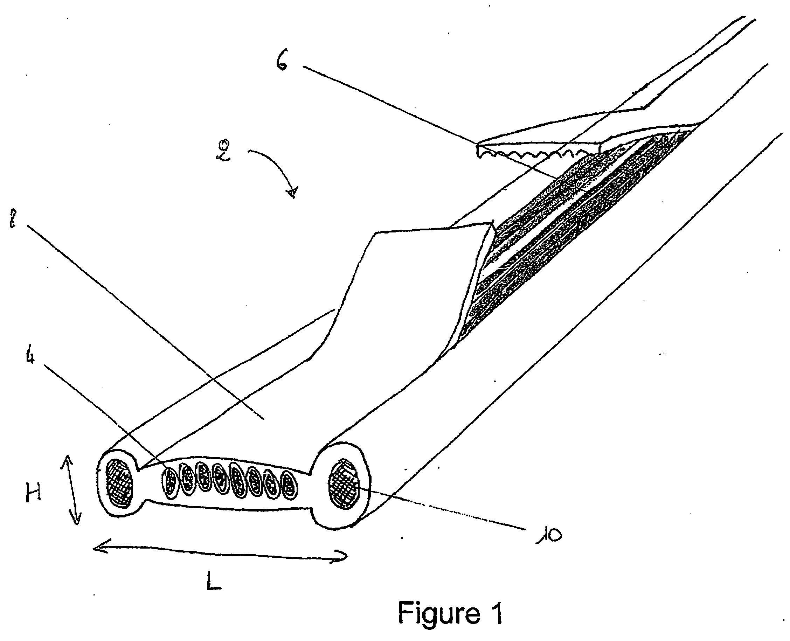

Figure 1 illustrates a cable according to an embodiment of the invention with a portion of jacket pulled away for the purposes of illustration.

The cable 2 comprises a plurality of micromodules 6, each micromodule comprising at least one optical fibre 4. In this particular example, eight micromodules 6 are represented each comprising six optical fibres 4. The cable thus comprises 48 optical fibres but other capacities can be envisaged.

A greasy component is applied between the optical fibres 4 at the time of formation of the micromodule. For example, the fibres can be immersed in a grease bath just before being assembled for the extrusion of the retaining enclosure of the micromodule. This greasy component can be a filling gel the main function of which is to ensure the longitudinal water-tightness of the micromodules 6 of optical fibres 4. The filling gel is generally obtained based on synthetic (poly alpha olefins PAO or polyisobutylene POB) or mineral oils. Thanks to the greasy component, the fibres 4 can slide in the micromodule 6 when they are pulled. A dropping of fibres 4 contained in a micromodule 6, without dropping the whole micromodule 6, can be obtained over a length of approximately 3 to 5 metres.

In a manner known per se, each fibre 4 can have a coloured coating and the enclosure of each micromodule 6 can also be coloured in order to facilitate the identification of the fibres 4 in the cable 2 during connection operations.

The cable 2 also comprises a jacket 8 in the form of a ribbon. The ribbon shape of the cable 2 facilitates access to all the micromodules 6 arranged in a sheet as well as the opening of the jacket 8.

The jacket 8 of the cable according to the invention is extruded over the micromodules 6, the jacket 8 resting on the enclosure of each micromodule 6. Each micromodule 6 is therefore mechanically coupled throughout its length to the jacket 8 in the cable 2. As a result the micromodule 6 cannot slide with respect to the jacket 8 and therefore cannot sag in the cable 2. Such micromodules 6 thus retained by the jacket 8 of the cable 2 cannot be pulled out for a dropping operation; this is why the fibres 4 themselves are to be extracted from the cable 2.

The jacket 8 can be produced with halogen-free flame-retardant (HFFR) materials. Polyvinyl chloride (PVC) can also be envisaged. These materials are compatible with the existing standards for inside uses, in particular vis-à-vis fire standards, and make it possible to produce the jacket 8 by extrusion. These materials also allow easy cutting with scissors or with a cutter and tearing by hand.

The cable 2 can also comprise two reinforcing elements 10 arranged in the jacket 8. These elements 10 can be GRP or "Glass Reinforced Plastic" rods or stranded or single-stranded galvanized steel rods or plastic rods reinforced with aramid fibres or any other appropriate reinforcing element for stiffening the cable 2. The elements 10 are therefore rigid reinforcements which make it possible to support the weight of the cable 2 during the installation operations as well as once installed in a vertical position. The cable 2 is thus reinforced which has the effect of limiting the tensions applied to the fibres 4. The reinforcing elements 10 can be placed on both outermost sides of the plurality of micromodules 6. This allows better distribution of the forces exerted by the weight of the cable 2. The diameter of the jacket 8 in the region of the reinforcing elements 10 can be greater than the thickness of the cable 2 in the region of the micromodules 6. This makes it possible to prevent crushing stresses being applied directly to the micromodules 6. Such stresses are first applied to the elements 10. In the example of Figure 1, the height H of the cable 2 defined as the diameter of the jacket 8 surrounding the reinforcing elements 10 is approximately 2.5 mm. Moreover, the width L of the cable 2 defined as the width between the two reinforcing elements 10 is approximately 18 mm.

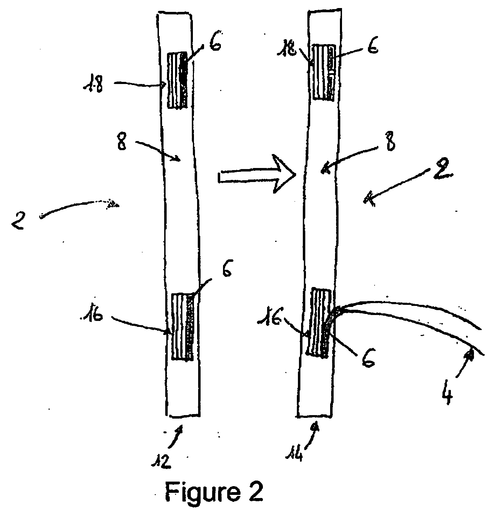

Figure 2 illustrates an embodiment of the dropping method according to the invention. The method for extracting the fibres 4 from a cut micromodule 6 of the cable 2 comprises two steps referenced 12 and 14 in Figure 2. It is however understood that the references 12 and 14 denote the same cable 2 but at different points in time during the implementation of the method of the invention.

In step 12, two openings 16 and 18 are made in the jacket 8 of a cable 2 in a vertical position. The first opening 18 is situated above the second opening 16. The openings 16 and 18 can be made manually using a cutting tool such as scissors or a cutter. The height dimension of the openings 16 and 18 can be less than 10 cm. The two openings 16 and 18 are spaced apart by a length of approximately 3 to 5 metres, i.e. the distance between two floors when the cable is installed in a building.

In each of the openings 16 and 18, a micromodule 6 is easily identifiable thanks to the colour of its enclosure.

In step 14, through the first opening 18, a micromodule 6 is cut. It is also possible to open the micromodule 6, i.e. to tear its retaining enclosure. The fibres 4 of the micromodule 6 are then cut, being recognizable by the colour of their coating. Through the second opening 16, the same micromodule 6 is open and the cut fibres 4 are pulled out. The micromodule 6 itself remains in the cable 2 by friction of its enclosure with the extruded jacket 8 of the cable 2. Sagging of the micromodule 6 in the cable 2 is thus prevented and any tension on the fibres 4 is limited.

The fibres 4 are then pulled out over a distance which can range from approximately 3 to 5 metres. The greasy component applied between the fibres 4 allows such an extraction over 3 to 5 metres with limited mechanical stresses. The dropped fibres 4 are then degreased and stored in a dropping box.

The cable 2 of the invention is particularly suitable for use as an inside cable. In particular, the cable 2 can be installed substantially vertically.

In the case of a building comprising several floors, for dropping the fibres 4 at a floor n-1, it is possible to envisage making a first opening 18 at the floor above n and the second opening 16 at the floor n-1 which must be connected. At the first opening 18, the jacket 8 of the cable 2 is opened, the enclosure of a micromodule 6 is opened and the optical fibres 4 of the micromodule 6 are cut. At the second opening 16, the jacket 8 of the cable 2 is opened, the enclosure of the micromodule 6 is opened and the cut optical fibres 4 are pulled out.

Advantageously, in order to connect the floor n, the first opening 18, which has been used for cutting the fibres 4 dropped at the floor below n-1, can also serve as a second opening 16 with a first opening 18 made at the floor above n+1. Thus, through the opening 18, the enclosure of another micromodule 6 is opened and the fibres 4 contained in this other micromodule 6 are pulled out after these fibres 4 have been cut in an opening above (not shown). This makes it possible to limit the number of windows to be cut out in the cable. The number of weakened points in the cable 2 is thus limited.

The cable 2 with micromodules 6 of optical fibre 4 and the method for extracting fibres from the cable according to the invention therefore make it possible to solve the problem of vertical installation without the micromodules 6 sagging in the cable 2.

The embodiments described above and the figures must be considered as having been presented as a non-restrictive illustration and the invention is not deemed to be limited to the details provided here but can be modified without exceeding the scope of the attached claims. In particular, materials other than those described can be used; and the openings in the vertical cable can be made in order to cut several fibres at a given height of cable and dropping these fibres through an opening made above if the incoming optical signal occurs from above.

## Claims

1. Flat optical fibre telecommunication cable (2) comprising:
- a plurality of micromodules (6) arranged in parallel and side by side in a plane, each micromodule (6) comprising an enclosure enclosing a plurality of optical fibres (4) and a greasy component applied between the fibres (4),
- a jacket (8) extruded over said plurality of micromodules (6), wherein said jacket (8) comprises two reinforcing elements (10) arranged on both the outermost sides of the plurality of micromodules (6),
**characterized in that** said jacket (8) rests on the enclosure of each micromodule (6) for longitudinally coupling said micromodule (6) throughout its length to said jacket (8), wherein each micromodule (6) is prevented from sliding with respect to said jacket (8) in cable (2) and wherein each of said micromodules (6) are retained by the jacket (8) of the cable (2).

2. Cable (2) according to one of claim 1, in which the material of the jacket (8) is chosen from halogen-free flame-retardant (HFFR) materials or polyvinyl chloride (PVC).

3. Cable (2) according to one of claims 1 or 2, in which the greasy component applied between the optical fibres (4) is chosen from synthetic or mineral oil-based filling gels.

4. Method for dropping optical fibres from a cable (2) according to any one of claims 1 to 3, comprising steps consisting of:
- making a first opening (18) in the jacket (8) of the cable (2) and the enclosure of at least one micromodule (6) and cutting the fibres (4) of the at least one micromodule (6), and
- making a second opening (16) in the jacket (8) of the cable, wherein said first opening (18) and said second opening (16) are spaced apart, tearing the enclosure of the at least same micromodule (6), wherein each of said micromodules (6) are retained by the jacket (8) of the cable (2), and pulling out said cut fibres (4) from the at least same micromodule (6) thus torn.

5. Method according to claim 4, in which dropping of said fibres from a cable (2) takes place in the vertical position.

6. Method according to one of claims 4-5, in which the first opening (18) is made at a first floor (n) and the second opening (16) is made at the floor below (n-1) in a building.

7. Method according to claim 6, in which the first opening (18) serves as a second opening (16) for a extraction of fibres cut at the floor above (n+1).

## Patentansprüche

1. Lichtwellenleiter-Telekommunikationsflachkabel (2) mit:
- einer Vielzahl von Mikromodulen (6), die parallel und Seite an Seite in einer Ebene angeordnet sind, wobei jedes Mikromodul (6) eine Kapselung umfasst, die eine Vielzahl von Lichtwellenleitern (4) sowie eine zwischen den Leitern (4) eingebrachte schmierige Komponente einschließt,
- eine über die Vielzahl von Mikromodulen (6) extrudierte Ummantelung (8), wobei die Ummantelung (8) zwei Verstärkungselemente (10) umfasst, die an den beiden äußersten Seiten der Vielzahl von Mikromodulen (6) angeordnet sind,
**dadurch gekennzeichnet, dass** die Ummantelung (8) auf der Kapselung jedes Mikromoduls (6) liegt, um das Mikromodul (6) über seine gesamte Länge in longitudinaler Richtung an die Ummantelung (8) zu koppeln, wobei jedes Mikromodul (6) am Verrutschen relativ zur Ummantelung (8) im Kabel (2) gehindert ist und wobei jedes der Mikromodule (6) von der Ummantelung (8) des Kabels (2) zurückgehalten ist.

2. Kabel (2) nach Anspruch 1, bei dem das Material der Ummantelung (8) aus halogenfreien flammhemmenden (HFFR) Materialien oder Polyvinylchlorid (PVC) gewählt ist.

3. Kabel (2) nach einem der Ansprüche 1 oder 2, bei dem die zwischen den Lichtwellenleitern (4) eingebrachte schmierige Komponente aus synthetischen oder mineralölbasierten Füllungsgelen gewählt ist.

4. Verfahren zum Entfernen von Lichtwellenleitern aus einem Kabel (2) nach einem der Ansprüche 1 bis 3, mit den folgenden Schritten:
- Herstellen einer ersten Öffnung (18) in der Ummantelung (8) des Kabels (2) und der Kapselung von wenigstens einem Mikromodul (6) sowie Durchtrennen der Leiter (4) des wenigstens einen Mikromoduls (6), und
- Herstellen einer zweiten Öffnung (16) in der Ummantelung (8) des Kabels, wobei die erste Öffnung (18) und die zweite Öffnung (16) voneinander beabstandet sind, Ziehen der Kapselung des wenigstens gleichen Mikromoduls (6), wobei jedes der Mikromodule (6) von der Ummantelung (8) des Kabels (2) zurückgehalten wird, und Herausziehen der durchtrennten Leiter (4) aus dem hierdurch gezogenen, wenigstens gleichen Mikromodul (6).

5. Verfahren nach Anspruch 4, bei dem das Entfernen der Leiter aus einem Kabel (2) in der vertikalen Position stattfindet.

6. Verfahren nach einem der Ansprüche 4 oder 5, bei dem die erste Öffnung (18) auf einer ersten Etage (n) hergestellt wird und die zweite Öffnung (16) auf der Etage (n-1) darunter in einem Gebäude hergestellt wird.

7. Verfahren nach Anspruch 6, bei dem die erste Öffnung (18) als eine zweite Öffnung (16) für eine Herausnahme von Leitern dient, die auf der Etage (n+1) darüber durchtrennt wurden.

## Revendications

1. Câble (2) plat de télécommunication à fibre optique comprenant :
- une pluralité de micromodules (6) agencée parallèlement et côte à côte dans un plan, chaque micromodule (6) comprenant une enveloppe renfermant une pluralité de fibres optiques (4) et un composant graisseux appliqué entre les fibres (4),
- une gaine (8) extrudée sur ladite pluralité de micromodules (6), où ladite gaine (8) comprend deux éléments de renfort (10) agencés sur les deux côtés les plus externes de la pluralité de micromodules (6),
**caractérisé en ce que** ladite gaine (8) repose sur l'enveloppe de chaque micromodule (6) pour coupler longitudinalement ledit micromodule (6) sur toute sa longueur à ladite gaine (8), où chaque micromodule (6) est empêché de coulisser par rapport à ladite gaine (8) dans le câble (2) et où chacun desdits micromodules (6) est retenu par la gaine (8) du câble (2).

2. Câble (2) selon la revendication 1, dans lequel le matériau de la gaine (8) est choisi parmi des matériaux retardateurs de flamme sans halogène (HFFR) ou du polychlorure de vinyle (PVC).

3. Câble (2) selon l'une des revendications 1 à 2, dans lequel le composant graisseux appliqué entre les fibres optiques (4) est choisi parmi les gels de remplissage à base d'huiles synthétiques ou minérales.

4. Procédé de dérivation de fibres optiques d'un câble (2) selon l'une quelconque des revendications 1 à 3, comprenant les étapes consistant à :
- pratiquer une première ouverture (18) dans la gaine (8) du câble (2) et l'enveloppe d'au moins un micromodule (6) et sectionner les fibres (4) de l'au moins un micromodule (6), et
- pratiquer une deuxième ouverture (16) dans la gaine (8) du câble, où ladite première ouverture (18) et ladite deuxième ouverture (16) sont espacées, déchirer l'enveloppe de l'au moins le même micromodule (6), où chacun desdits micromodules (6) est retenu par la gaine (8) du câble, et tirer lesdites fibres (4) sectionnées de l'au moins le même micromodule (6) ainsi déchiré.

5. Procédé selon la revendication 4, dans lequel la dérivation desdites fibres d'un câble (2) se fait en position verticale.

6. Procédé selon l'une des revendications 4 à 5, dans lequel la première ouverture (18) est pratiquée à un premier étage (n) et la deuxième ouverture (16) est pratiquée à l'étage en dessous (n-1) dans un immeuble.

7. Procédé selon la revendication 6, dans lequel la première ouverture (18) sert de deuxième ouverture (16) pour une extraction de fibres sectionnées à l'étage au-dessus (n+1).
